# EUROPÄISCHE PATENTSCHRIFT

(11) **EP 2 639 001 B1**
(45) Veröffentlichungstag und Bekanntmachung des Hinweises auf die Patenterteilung: **28.06.2017**
(21) Anmeldenummer: 12159484.0
(22) Anmeldetag: 14.03.2012
(51) Int. Cl.: B23F 5/16, B23F 15/06

(54) **Verfahren zur spanenden Bearbeitung eines Werkstücks**
Method for machining a workpiece
Procédé de traitement sous tension d'une pièce usinée

(43) Veröffentlichungstag der Anmeldung: 18.09.2013
(73) Patentinhaber: Siemens Aktiengesellschaft, 80333 München (DE)
(72) Erfinder: Schaffeld, Richard, 46419 Isselburg (DE)

(56) Entgegenhaltungen:
- DE-A1- 10 305 752
- DE-A1-102009 003 601
- HÜNECKE C: "Reliable and efficient skiving", GEAR TECHNOLOGY, RANDALL PUBLISHING CO. ELK GROVE, ILLINOIS, US, 1. September 2011 (2011-09-01), Seiten 11-13, XP007920036, ISSN: 0743-6858

## Beschreibung

Die vorliegende Erfindung betrifft ein Verfahren gemäß dem Oberbegriff des Anspruchs 1 zur spanenden Bearbeitung eines Werkstücks, bei dem eine Stirnflächenverzahnung auf der Stirnfläche des Werkstücks erzeugt wird. Derartige Stirnflächenverzahnungen werden beispielsweise dazu eingesetzt, axial zueinander ausgerichtete Bauteile nach Art einer Kupplung drehfest miteinander in Eingriff zu bringen.

Verfahren zur Erzeugung einer Stirnflächenverzahnung auf der Stirnfläche eines Werkstücks sind im Stand der Technik bekannt. Grundsätzlich kann hier zwischen intermittierenden Teilverfahren und kontinuierlichen Verfahren unterschieden werden. Bei den intermittierenden Teilverfahren wird mit dem Werkzeug jeweils eine einzelne Zahnlücke des Werkstücks bearbeitet. Nach Fertigstellung der Zahnlücke werden dann Werkstück und Werkzeug relativ zueinander entsprechend der Teilung des herzustellenden Zahnrades gedreht, woraufhin die Bearbeitung der nächsten Zahnlücke erfolgen kann. Auf diese Weise wird Schritt für Schritt ein Zahnrad gefertigt. Die Herstellung einer Stirnflächenverzahnung mit intermittierenden Teilverfahren nimmt zwar viel Zeit in Anspruch. Dafür sind diese Verfahren aber meist sehr flexibel einsetzbar. Die kontinuierlichen Verfahren basieren hingegen auf gekoppelten Bewegungsabläufen zwischen Werkstück und Werkzeug, wodurch eine kontinuierliche Teilungsbewegung und damit eine kürzere Bearbeitungsdauer erzielt werden. Ein Beispiel für ein solches kontinuierliches Verfahren ist beispielsweise das Abwälzfräsverfahren. Ein Problem der bekannten kontinuierlichen Verfahren, die derzeit zur Erzeugung einer Stirnflächenverzahnung auf der Stirnfläche eines Werkstücks zum Einsatz kommen, besteht allerdings darin, dass diese nur auf speziellen Verzahnungsmaschinen durchgeführt werden können. Hierdurch ergeben sich zum einen hohe Investitionskosten. Darüber hinaus müssen weitere spanende Bearbeitungen der Werkstücke in zusätzlichen Bearbeitungsmaschinen durchgeführt werden, was ein Umspannen des Werkstückes erforderlich macht. Das Umspannen geht jedoch mit Qualitätseinbußen, insbesondere hinsichtlich der Rundlaufgenauigkeit, und mit längeren Durchlaufzeiten einher.

Ein Verfahren der eingangs genannten Art ist beispielsweise in der Druckschrift DE 10 2009 003 601 A1 beschrieben.

Ausgehend von diesem Stand der Technik ist es eine Aufgabe der vorliegenden Erfindung, ein alternatives Verfahren der eingangs genannten Art zu schaffen, mit dem kurze Bearbeitungszeiten, kurze Durchlaufzeiten und hohe Rundlaufgenauigkeiten realisierbar sind und geringe Investitionskosten einhergehen.

Zur Lösung dieser Aufgabe schafft die vorliegende Erfindung ein Verfahren der eingangs genannten Art, das dadurch gekennzeichnet ist, dass das Wälzschälwerkzeug in der X-Z-Ebene in einem Winkel zur X-Achse angeordnet ist, der größer als 0° und kleiner als 20° ist.

Das Wälzschälen ist als Fertigungsverfahren zur Herstellung von Verzahnungen an Werkstücken grundsätzlich bekannt. Es gehört zur Gruppe der kontinuierlichen spanenden Zahnradherstellungsverfahren mit geometrisch bestimmter Schneide. Das Wälzschälen zeichnet sich insbesondere dadurch aus, dass die Rotationsachse des Wälzschälwerkzeugs zur Werkzeugvorschubrichtung um einen Winkel geneigt ist, der ungleich 0 ist. Die resultierende Relativbewegung zwischen dem Werkstück und dem Werkzeug entspricht einer Schraubbewegung, die in einen Drehanteil und in einen Schubanteil zerlegt werden kann, wobei der Schubanteil zur Realisierung der Schnittbewegung genutzt wird. Das Wälzschälen wird derzeit allerdings meist dazu eingesetzt, um rotationssymmetrische Werkstücke entlang ihres kreisrunden Außen- oder Innenumfangs mit einer Außen- oder Innenverzahnung zu versehen, siehe hierzu beispielsweise die DE-U-20 2011 050 054. Untersuchungen der Anmelderin haben überraschend ergeben, dass das Wälzschälen alternativ auch zur Erzeugung einer Stirnflächenverzahnung auf der Stirnfläche eines Werkstücks eingesetzt werden kann, wobei die Stirnfläche bevorzugt ringförmig und eben ausgebildet ist. Der Einsatz des Wälzschälens geht insbesondere mit dem Vorteil sehr kurzer Bearbeitungszeiten einher. Es kann auf einem herkömmlichen Dreh-Fräszentrum durchgeführt werden, so dass verschiedenste spanende Bearbeitungen in einer einzelnen Werkstückaufspannung realisierbar sind. Hierdurch können kurze Durchlaufzeiten, sehr gute Rundlaufeigenschaften des Werkstücks und eine hohe Maschinenauslastung realisiert werden. Zudem ist es nicht erforderlich, eine separate Verzahnungsmaschine anzuschaffen, was zu geringen Investitionskosten führt.

Erfindungsgemäß schließt die Vorschubrichtung des Wälzschälwerkzeugs während der Erzeugung der Stirnflächenverzahnung mit der Rotationsachse des Wälzschälwerkzeugs einen Winkel β ein, wobei β größer als 0° und kleiner als 35° ist und insbesondere im Bereich zwischen 15° und 25° liegt.

Bevorzugt wird während des Wälzschälens ein Wälzschälwerkzeug mit einer Mehrzahl von umfangsseitig angeordneten länglichen Schneiden verwendet. Die Schneiden des Wälzschälwerkzeugs sind in Umfangsrichtung vorteilhaft voneinander beabstandet, wobei die jeweiligen Abstände in Umfangsrichtung jeweils einem ganzzahligen Vielfachen einer Schneidenbreite entsprechen. Auf diese Weise können in Abhängigkeit der herzustellenden Verzahnung ungewollte Kollisionen zwischen dem Werkstück und dem Wälzschälwerkzeug verhindert werden.

Gemäß einer Ausgestaltung der vorliegenden Erfindung erfolgt zusätzlich zur Erzeugung der Stirnflächenverzahnung zumindest eine weitere spanende Bearbeitung des Werkstücks auf derselben Bearbeitungsmaschine unter Beibehaltung der Werkstückeinspannung, insbesondere eine Drehbearbeitung und/oder eine Fräsbearbeitung und/oder eine Bohrbearbeitung. Die Durchführung mehrerer Bearbeitungsschritte auf derselben Bearbeitungsmaschine unter Beibehaltung der Werkstückeinspannung geht mit kurzen Bearbeitungszeiten, kurzen Durchlaufzeiten und einer hohen Rundlaufgenauigkeit einher.

Gemäß einer Ausgestaltung der vorliegenden Erfindung wird das Verfahren auf einem Dreh-Fräszentrum durchgeführt. Entsprechend ist die Anschaffung einer gesonderten Verzahnungsmaschine nicht erforderlich, weshalb die Investitionen gering gehalten werden können.

Weitere Einzelheiten und Vorteile des erfindungsgemäßen Verfahrens werden anhand der nachfolgenden Beschreibung einer Ausführungsform des erfindungsgemäßen Verfahrens unter Bezugnahme auf die beiliegende Zeichnung deutlich. Darin ist
- Figur 1: eine schematische Vorderansicht von Komponenten eines Dreh-Fräszentrums, anhand der ein erfindungsgemäßes Verfahren zur Herstellung einer Stirnflächenverzahnung auf der Stirnfläche eines Werkstücks erläutert wird;
- Figur 2: eine Ansicht in Richtung des Pfeils II in Figur 1;
- Figur 3: eine Seitenansicht einer Ausführungsform eines Wälzschälwerkzeugs, das bei der Durchführung des erfindungsgemäßen Verfahrens eingesetzt werden kann;
- Figur 4: eine Unteransicht des in Figur 3 dargestellten Wälzschälwerkzeugs;
- Figur 5: eine Draufsicht eines Werkstückes, das auf seiner Stirnfläche mit einer Stirnflächenverzahnung versehen ist, wobei die Stirnflächenverzahnung mit dem in den Figuren 3 und 4 dargestellten Wälzschälwerkzeug unter Einsatz des erfindungsgemäßen Verfahrens hergestellt ist;
- Figur 6: eine perspektivische Teilseitenansicht des in Figur 5 dargestellten Werkstücks und
- Figur 7: eine perspektivische Teilseitenansicht, die zwei der in den Figuren 5 und 6 dargestellten Werkstücke zeigt, die axial zueinander ausgerichtet sind und deren Stirnflächenverzahnungen nach Art einer Kupplung ineinander greifen.

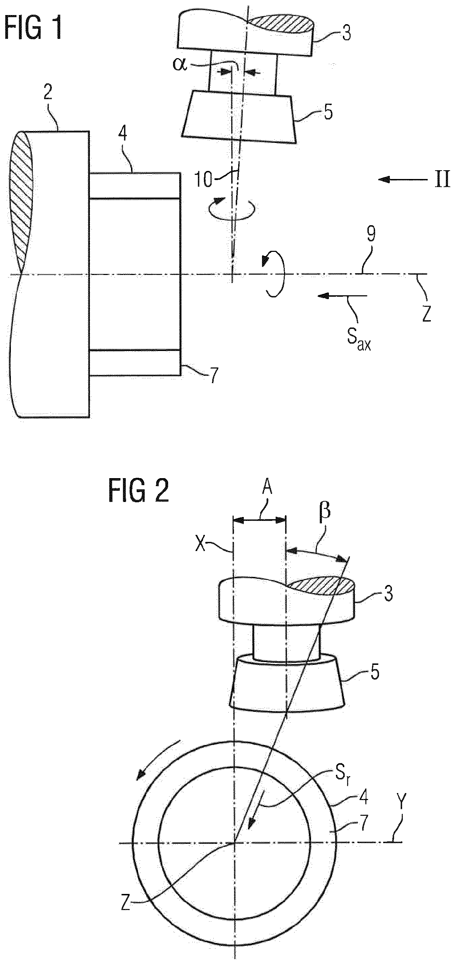

Die Figuren 1 und 2 zeigen eine schematische Darstellung eines herkömmlichen Dreh-Fräszentrums 1 mit den Achsen X, Y und Z, das eine Drehspindel 2 und eine Frässpindel 3 aufweist, wobei die Drehspindel 2 mit einem Spannfutter zur Aufnahme eines Werkstücks 4 und die Frässpindel 3 mit einem Spannfutter zur Aufnahme eines Wälzschälwerkzeugs 5 versehen ist. Alternativ kann das Spannfutter der Frässpindel 3 natürlich auch ein Fräs- oder Bohrwerkzeug aufnehmen. Ferner umfasst das Dreh-Fräszentrum 1 in bekannter Weise einen nicht näher dargestellten, mit einem Werkzeugrevolver zur Aufnahme verschiedener Drehwerkzeuge versehenen Schlitten, so dass auf dem Dreh-Fräszentrum 1 herkömmliche Drehbearbeitungen durchgeführt werden können. Die Drehspindel 2 und die Frässpindel 3 sind derart ansteuerbar, dass sie synchron miteinander gedreht werden können. Die Frässpindel 3 ist stufenlos in X-, Y- und Z-Richtung verfahrbar.

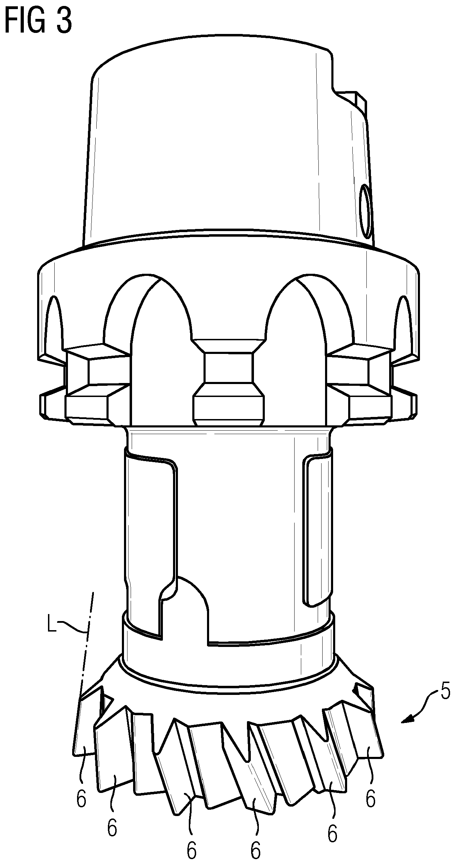

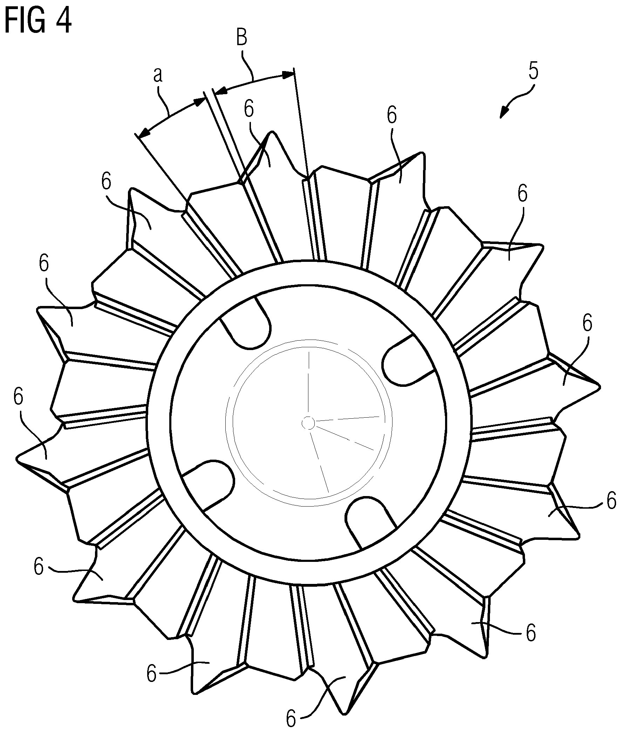

Das Wälzschälwerkzeug 5 ist in den Figuren 3 und 4 dargestellt. Das Wälzschälwerkzeug 5 ist mit einer Mehrzahl von umfangseitig angeordneten, länglich ausgebildeten und radial vorstehenden Schneiden 6 versehen. Die Schneiden 6 des Wälzschälwerkzeugs 5 sind in Umfangsrichtung voneinander beabstandet, wobei die jeweiligen Abstände a in Umfangsrichtung einem ganzzahligen Vielfachen einer Schneidenbreite B entsprechen. Mit anderen Worten ist vorliegend zwischen zwei benachbarten Schneiden 6 jeweils eine Schneide weggelassen.

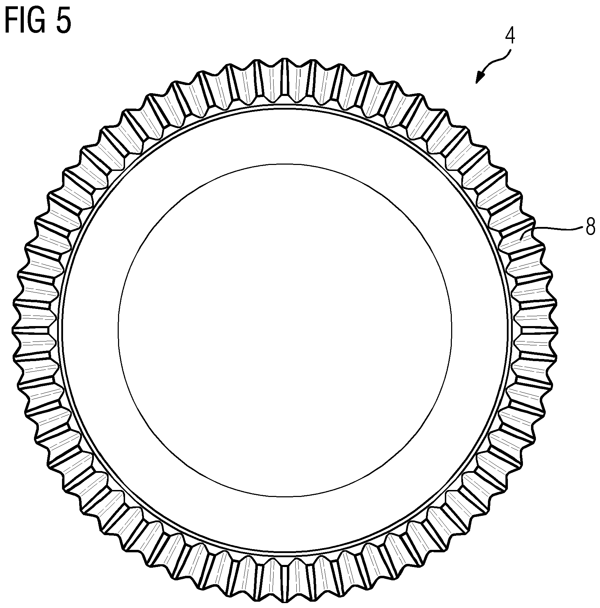

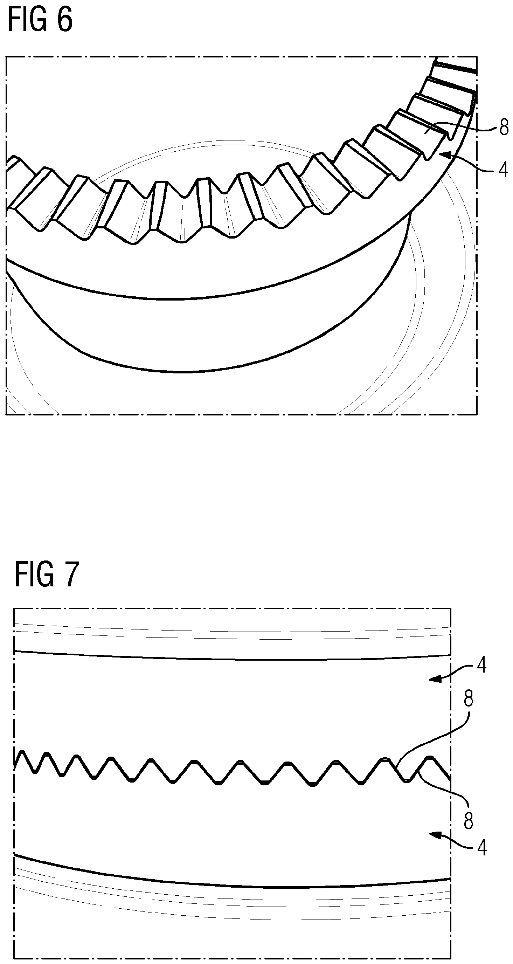

Um die plan ausgebildete Stirnfläche 7 des an der Drehspindel 2 aufgenommenen, vorliegend zylindrisch ausgebildeten Werkstücks 4 mittels Wälzschälen erfindungsgemäß mit einer Stirnflächenverzahnung 8 zu versehen, wird die Frässpindel 3 und somit die Rotationsachse 10 des Wälzschälwerkzeugs 5 in Abhängigkeit von dem gewünschte Tragbild der zu erzeugenden Verzahnung in der X-Z-Ebene in einem Winkel α zur X-Achse angeordnet, wie es in Figur 2 dargestellt ist, wobei α normalerweise größer als 0° und kleiner als 20° ist. Ferner wird die Frässpindel 3 derart positioniert, dass die Rotationsachse 10 des Wälzschälwerkzeugs 5 in Y-Richtung um einen Abstand A versetzt zur X-Achse positioniert ist. Mit anderen Worten wird das Wälzschälwerkzeug 5 in Bezug auf das Werkstück 4 in Y-Richtung außermittig angeordnet. Während des Wälzschälens wird das Wälzschälwerkzeug 5 relativ zum Werkstück 4 mit einem Radialvorschub sr sowohl in X- als auch in Y-Richtung bewegt, während das Werkstück 4 und das Wälzschälwerkzeug 5 synchron um ihre jeweiligen Rotationsachsen 9 und 10 gedreht werden. Die Vorschubrichtung des Wälzschälwerkzeugs 5 schließt also mit der Rotationsachse 10 des Wälzschälwerkzeugs 5 einen Winkel β ein, wobei β größer als 0° und kleiner als 35° ist und insbesondere im Bereich zwischen 15° und 25° liegt. Dieser Winkel β bestimmt die Schnittgeschwindigkeit, mit der das Werkstück 4 bearbeitet wird. Ferner kann ein Axialvorschub sax in Z-Richtung als Zustellbewegung ausgeführt werden. Auf diese Weise wird entsprechend der Formgebung des Wälzschälwerkzeugs 5 die Stirnflächenverzahnung 7 auf der Stirnfläche 6 des Werkstücks 4 erzeugt, wie es in den Figuren 5 und 6 dargestellt ist, wobei die Oberseiten der Zahnköpfe der fertigen Stirnflächenverzahnung 7 in einer gemeinsamen Ebene liegen.

Figur 7 zeigt zwei identisch ausgebildete Werkstücke 4, die jeweils erfindungsgemäß unter Einsatz des Wälzschälverfahrens mit einer Stirnflächenverzahnung 8 versehen wurden. Die Werkstücke 4 sind axial zueinander ausgerichtet und derart angeordnet, dass ihre Stirnflächenverzahnungen 8 nach Art einer Kupplung ineinander greifen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur spanenden Bearbeitung eines Werkstücks (4), bei dem eine Stirnflächenverzahnung (8) auf der Stirnfläche (7) des Werkstücks (4) mittels Wälzschälen erzeugt wird, wobei bezogen auf ein Koordinatensystem mit zueinander senkrecht angeordneten X-, Y- und Z-Achsen das Werkstück (4) um die Z-Achse rotiert wird und die Vorschubrichtung des Wälzschälwerkzeugs (5) während der Erzeugung der Stirnflächenverzahnung (8) mit der Rotationsachse (10) des Wälzschälwerkzeugs (5) einen Winkel (β) einschließt, wobei (β) größer als 0° und kleiner als 35° ist und insbesondere im Bereich zwischen 15° und 25° liegt, **dadurch gekennzeichnet, dass** die Rotationsachse (10) des Wälzschälwerkzeugs (5) in der X-Z-Ebene in einem Winkel (α) zur X-Achse angeordnet ist, der größer als 0° und kleiner als 20° ist.

2. Verfahren nach Anspruch 1, **dadurch gekennzeichnet, dass** die Stirnfläche (7) des Werkstücks (4), auf der die Stirnflächenverzahnung (8) erzeugt wird, ringförmig und eben ausgebildet ist.

3. Verfahren nach einem der vorhergehenden Ansprüche, **dadurch gekennzeichnet, dass** während des Wälzschälens ein Wälzschälwerkzeug (5) mit einer Mehrzahl von umfangsseitig angeordneten länglichen Schneiden (6) verwendet wird.

4. Verfahren nach Anspruch 3, **dadurch gekennzeichnet, dass** die Schneiden (6) des Wälzschälwerkzeugs (5) in Umfangsrichtung voneinander beabstandet sind, wobei die jeweiligen Abstände in Umfangsrichtung einem ganzzahligen Vielfachen einer Schneidenbreite (B) entsprechen.

5. Verfahren nach einem der vorhergehenden Ansprüche, **dadurch gekennzeichnet, dass** zusätzlich zur Erzeugung der Stirnflächenverzahnung (8) zumindest eine weitere spanende Bearbeitung des Werkstücks (4) auf derselben Bearbeitungsmaschine unter Beibehaltung der Werkstückeinspannung erfolgt, insbesondere eine Drehbearbeitung und/oder eine Fräsbearbeitung und/oder eine Bohrbearbeitung.

6. Verfahren nach einem der vorhergehenden Ansprüche, **dadurch gekennzeichnet, dass** dieses auf einem Dreh-Fräszentrum (1) durchgeführt wird.

## Claims

1. Method for machining a workpiece (4), in which an end face gearing (8) is created on the end face (7) of the workpiece (4) by hob peeling, wherein in relation to a coordinates system with X, Y and Z axes arranged perpendicularly to one another the workpiece (4) is rotated about the Z axis and during the creation of the end face gearing (8) the feed direction of the hob peeling tool (5) encloses, with the axis of rotation (10) of the hob peeling tool (5), an angle (β) which is greater than 0° and less than 35° and in particular lies in the range between 15° and 25°, **characterised in that** the axis of rotation (10) of the hob peeling tool (5) is arranged in the X-Z plane at an angle (α) to the X axis which is greater than 0° and less than 20°.

2. Method according to claim 1, **characterized in that** the end face (7) of the workpiece (4), on which the end face gearing (8) is created, is configured as annular and flat.

3. Method according to one of the preceding claims, **characterised in that** during hob peeling a hob peeling tool (5) with a plurality of longitudinal cutting edges (6) arranged circumferentially is used.

4. Method according to claim 3, **characterised in that** the cutting edges (6) of the hob peeling tool (5) are spaced apart from one another in the circumferential direction, wherein the respective distances in the circumferential direction correspond to a whole-number multiple of a cutting edge width (B).

5. Method according to one of the preceding claims, **characterised in that** in addition to the creation of the end face gearing (8) at least one further machining of the workpiece (4) is effected on the same machine tool while retaining the workpiece clamping, in particular turning and/or milling and/or drilling.

6. Method according to one of the preceding claims, **characterised in that** it is performed on a turning/milling centre (1).

## Revendications

1. Procédé d'usinage avec enlèvement de copeaux d'une pièce (4), dans lequel on produit, au moyen d'un écroûtage par fraisage, une denture (8) de surface frontale sur la face (7) frontale de la pièce (4), dans lequel, rapporté à un système de coordonnées ayant des axes X, Y et Z perpendiculaires entre eux, on fait tourner la pièce (4) autour de l'axe Z et la direction d'avance de l'outil (5) d'écroûtage par fraisage fait, pendant la production de la denture (8) de surface frontale, un angle (β) avec l'axe (10) de rotation de l'outil (5) d'écroûtage par fraisage, (β) étant plus grand que 0° et plus petit que 35° et notamment dans la plage comprise entre 15° et 25°, **caractérisé en ce que** l'axe (10) de rotation de l'outil (5) d'écroûtage par fraisage est disposé dans le plan X-Z en faisant un angle (α) avec l'axe X, qui est plus grand que 0° et plus petit que 20°.

2. Procédé suivant la revendication 1, **caractérisé en ce que** la face (7) frontale de la pièce (4), sur laquelle on produit la denture (8) de surface frontale, est annulaire et plane.

3. Procédé suivant l'une des revendications précédentes, **caractérisé en ce que**, pendant l'écroûtage par fraisage, on utilise un outil (5) d'écroûtage par fraisage ayant une pluralité de taillants (6) oblongs disposés du côté du pourtour.

4. Procédé suivant la revendication 3, **caractérisé en ce que** les taillants (6) de l'outil (5) d'écroûtage par fraisage sont à distance les uns des autres dans la direction du pourtour, les distances dans la direction du pourtour correspondant à un multiple en nombre entier d'une largeur (B) de taillant.

5. Procédé suivant l'une des revendications précédentes, **caractérisé en ce qu'**en plus de la production de la denture (8) de la surface frontale, a lieu au moins un autre usinage, avec enlèvement de copeaux de la pièce (4), sur la même machine d'usinage, en conservant le blocage de la pièce, notamment un usinage au tour et/ou un fraisage et/ou un perçage.

6. Procédé suivant l'une des revendications précédentes, **caractérisé en ce qu'**on l'effectue sur un centre de fraisage et de tournage.
